# EUROPÄISCHE PATENTSCHRIFT

(11) **EP 1 124 067 B1**
(45) Veröffentlichungstag und Bekanntmachung des Hinweises auf die Patenterteilung: **21.09.2005**
(21) Anmeldenummer: 01101494.1
(22) Anmeldetag: 24.01.2001
(51) Int. Cl.: F16C 29/06

(54) **Linearwälzlager**
Linear roller bearing
Palier linéaire à billes

(30) Priorität: 09.02.2000 DE 10005719
(43) Veröffentlichungstag der Anmeldung: 16.08.2001
(73) Patentinhaber: INA-Schaeffler KG, 91074 Herzogenaurach (DE)
(72) Erfinder: Greiner, Heinz, 73061 Ebersbach (DE)

(56) Entgegenhaltungen:
- EP-A- 0 474 948
- DE-A- 3 331 287
- US-A- 4 555 149
- US-A- 4 983 049
- PATENT ABSTRACTS OF JAPAN Bd. 0091, Nr. 49 (M-390), 25. Juni 1985 (1985-06-25) & JP 60 026816 A (NTN TOYO BEARING KK), 9. Februar 1985 (1985-02-09)

## Beschreibung

### Gebiet der Erfindung

Die Erfindung betrifft ein Verfahren zur Herstellung eines Linearwälzlagers, sowie ein Linearwälzlager mit einem im Querschnitt U-förmigen Führungswagen, der mit einem U-Steg und zwei U-Schenkeln einen Wagenhohlraum bildet und eine Führungsschiene teilweise umgibt sowie über Kugeln an zwei Längsseiten der Führungsschiene abgestützt und längs dieser verfahrbar ist, wobei jeder U-Schenkel des Führungswagens an seiner der Führungsschiene zugewandten Innenseite eine geschliffene Laufbahn mit einem etwa viertelkreisförmigen Querschnitt für die Kugeln aufweist und die Laufbahn mit einer Schleifscheibe hergestellt ist, deren Durchmesser das Diagonalmaß des Wagenhohlraums übersteigt und deren außerhalb des Führungswagens verlaufende Drehachse gegenüber einer Symmetrieebene des Führungswagens in einem spitzen Winkel angeordnet ist.

### Hintergrund der Erfindung

Die Herstellung der Laufbahnen von Wagen für Profilschienenführungen erfolgt entweder durch senkrechte kleine Schleifscheiben oder durch mehrere schräg hintereinander angeordnete Schleifscheiben. Kleine Schleifscheiben führen zu ungünstigen Schliffwerten, geringen Standzeiten und geringen Oberflächengüten. Bei mehreren schräg angeordneten Scheiben begrenzt der Innenraum des Führungswagens, also der Wagenhohlraum, ebenfalls die Scheibengröße. Der Vorteil liegt hier in der Schiefstellung der Schleifscheibe. Es wird also eine begrenzte, jedoch etwas größere Scheibe benutzt.

Bei gleicher Drehzahl ist mit einer Schleifscheibe mit großem Durchmesser eine höhere Umfangsgeschwindigkeit zu erzielen, als mit einer Scheibe mit kleinem Durchmesser. Mit großem Durchmesser erhält man eine höhere Schleifleistung und erreicht eine Erhöhung der Standzeit der Scheibe. Die Drehzahl der Schleifspindel kann nicht unbegrenzt erhöht werden, weil andernfalls ihre Lager zerstört würden.

Aus der Druckschrift EP 0 318 980 B1 ist ein Linearkugellager mit einem als Lagerkörper bezeichneten Führungswagen bekannt, der einen Schenkelabschnitt mit einer oberen Nut für belastete Kugeln mit etwa halbkreisförmigem Querschnitt und mit einer unteren Nut für belastete Kugeln mit etwa viertelkreisförmigem Querschnitt aufweist. Nachteilig dabei ist die Fortführung des Radius der oberen Nut bis zur senkrechten Innenwand des Schenkelabschnitts. Das bedingt zwangsläufig, dass bei der Herstellung der oberen Nut durch Schleifen mit einer kleinen Schleifscheibe geschliffen werden muss.

Aus der Druckschrift DE 33 31 287 C2 ist ein Verfahren zum Schleifen des Lagerkörpers für ein Linearkugellager bekannt. Dort werden mit einer Schleifscheibe großen Durchmessers, die gegenüber dem zu schleifenden Führungswagen schräg gestellt ist, jeweils zwei Laufbahnen für tragende Kugeln an der Innenseite eines U-Steges des Führungswagens geschliffen. Die Rücklaufkanäle für die in Umläufen angeordneten Kugeln sind als Bohrungen des Führungswagens ausgeführt und müssen zusätzlich zu den Laufbahnen für die tragenden Kugeln in besonderen Arbeitsgängen hergestellt werden.

Die Druckschrift DE 33 04 895 C2 zeigt ein Linearwälzlager mit Lagerkörpern, bei welchem ein Kugelumlaufschuh oder Lagerkörper jeweils angesetzte Blechteile aufweist, und zwar einen W-förmigen Kugelhalter für die tragenden Kugeln und eine Abdeckung mit U-förmigem Querschnitt, welche Kugelführungsrillen für die nicht belasteten, rücklaufenden Kugeln nach außen verschließt. Infolge dieser zusätzlichen Blechteile ergibt sich eine aufwendige Bauweise und Montage des Kugelumlaufschuhs.

Aus der Druckschrift DE 30 19 131 A1 ist ein Linearwälzlager bekannt, bei welchem an als Halteplatten ausgebildeten Führungsteilen in den Tragbereichen und in den Rücklaufbereichen für die Kugeln längsgerichtete durchgehende Öffnungen ausgebildet sind. Daher ist hier jedes Führungsteil in dem jeweiligen Kugelbereich nicht nur mit einer nach außen weisenden verengten Öffnung versehen, sondern auch zu dem als Führungswagen wirkenden Maschinenelement hin offen. Durch diese Öffnungen ragen die Kugeln hindurch und werden von längsgerichteten Laufbahnen geführt, die als Rillen in dem Maschinenelement eingearbeitet werden müssen, so dass sich zusätzliche Bearbeitungs- und Werkzeugkosten ergeben.

### Zusammenfassung der Erfindung

Der Erfindung liegt die Aufgabe zu Grunde, ein Linearwälzlager zu schaffen, welches sich mit geringem Bearbeitungsaufwand herstellen lässt, wobei infolge guter Schleifbedingungen sehr hohe Oberflächengüten der Laufbahnen erzielbar sind.

Diese Aufgabe wird nach dem kennzeichnenden Teil des Patentanspruchs 1 erfindungsgemäß dadurch gelöst, dass an dem Führungswagen an der von der Führungsschiene abgewandten Außenseite jedes U-Schenkels eine Anschlagfläche mit einer Haltekontur für ein die Kugeln enthaltendes Führungsteil ausgebildet wird und die Laufbahn eines der beiden U-Schenkel sowie die Anschlagfläche mit der Haltekontur des anderen U-Schenkels gemeinsam in einem Arbeitsgang mit der Schleifscheibe hergestellt werden. Durch das gleichzeitige Schleifen einer Laufbahn und einer Anschlagfläche ergibt sich eine erheblich verkürzte Bearbeitung des Führungswagens des Linearlagers. Vorteilhafte Weiterbildungen des Lagers sind den Unteransprüchen entnehmbar.

### Kurze Beschreibung der Zeichnung

Ein Ausführungsbeispiel der Erfindung ist in der Zeichnung dargestellt und wird im folgenden näher beschrieben. Es zeigen
- Figur 1: ein erfindungsgemäßes Linearlager, teilweise im Querschnitt und teilweise in einer stirnseitigen Ansicht;
- Figur 2: einen Führungswagen des Linearlagers im Querschnitt mit einer an den zu schleifenden Oberflächen anliegenden Schleifscheibe.

### Ausführliche Beschreibung der Zeichnung

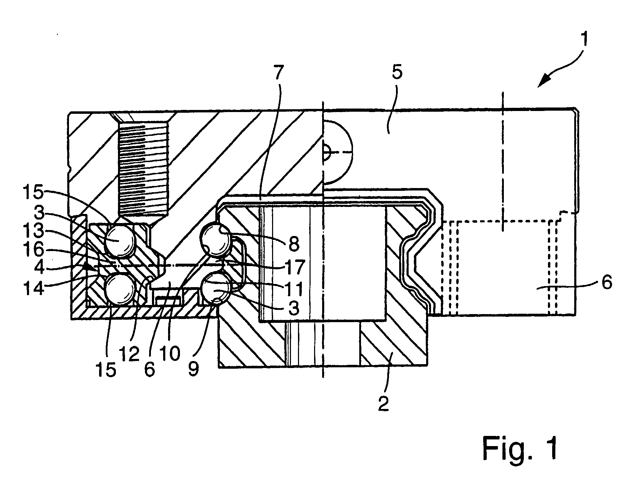

Das in Figur 1 dargestellte Linearwälzlager enthält einen Führungswagen 1, der an einer Führungsschiene 2 über Kugeln 3 abgestützt und in Schienenlängsrichtung verfahrbar ist. Das Linearwälzlager ist mit zwei Führungsteilen 4 als vierreihiges Lager ausgebildet. Jedes Führungsteil 4 enthält zwei Kanäle, welche die Umlenkung und Rückführung der in endlosen Umläufen angeordneten Kugeln 3 bewirken. Der Führungswagen 1 ist im Querschnitt U-förmig ausgeführt und enthält einen U-Steg 5 und zwei an diesem sich anschließende U-Schenkel 6. Auf diese Weise bildet der Führungswagen 1 einen Wagenhohlraum 7. Er umfasst teilweise die Führungsschiene 2, so dass diese in den Wagenhohlraum 7 hineinragt.

An beiden Längsseiten der Führungsschiene 2 sind jeweils zwei Laufbahnen für Kugeln 3 ausgebildet, und zwar an jeder Seite der Führungsschiene 2 eine obere Laufbahn 8 und eine untere Laufbahn 9. Diese erstrecken sich parallel in Führungsschienenlängsrichtung. An diesen Laufbahnen stützt sich der Führungswagen 1 über die Kugeln 3 ab. Zu diesem Zweck weist er an jedem U-Schenkel 6 an der der Führungsschiene 2 benachbarten Innenseite eine obere, dem U-Steg 5 benachbarte Laufbahn 10 und eine untere, von dem U-Steg 5 entfernte Laufbahn 11 auf.

Zwischen den Laufbahnen 8 bzw. 9 der Führungsschiene 2 und den Laufbahnen 10 bzw. 11 des Führungswagens 1 sind an jeder Längsseite der Führungsschiene 2 die tragenden Kugeln 3 angeordnet. Von den vier endlosen Umläufen der Kugeln 3 sind an jeder Längsseite der Führungsschiene 2 zwei Umläufe vorgesehen. Das Führungsteil 4, welches einen U-Schenkel 6 umgibt, wird jeweils an einer Anschlagfläche 12 des zugehörigen U-Schenkels 6 gehalten. Diese Anschlagfläche 12 weist eine Haltekontur auf und befindet sich jeweils an der von der Führungsschiene 2 abgewandten Außenseite des U-Schenkels 6. In dem Führungsteil 4 sind zwei zu den Laufbahnen 10 und 11 des U-Schenkels 6 parallele Rücklaufkanäle für Kugeln 3 ausgebildet, und zwar ein oberer Rücklaufkanal 13 und ein unterer Rücklaufkanal 14. An den Enden dieser Kanäle schließen sich jeweils Umlenkkanäle an, die die Rücklaufkanäle 13 und 14 mit den zugehörigen Bereichen tragender Kugeln 3 zwischen den Laufbahnen 8 und 10 einerseits und den Laufbahnen 9 und 11 andererseits verbinden. Auf diese Weise wird der obere Rücklaufkanal 13 mit der Laufbahn 10 und der untere Rücklaufkanal 14 mit der Laufbahn 11 verbunden.

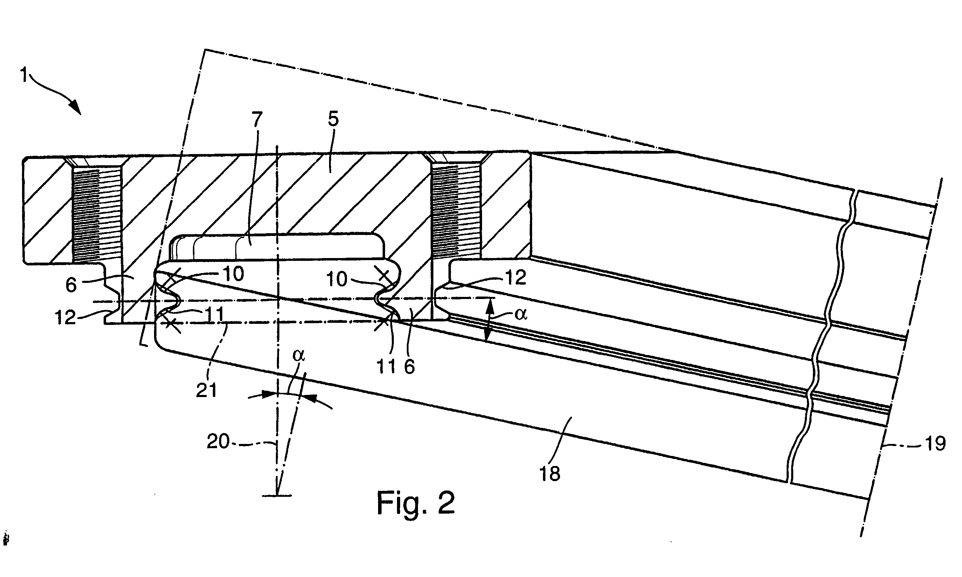

Jeder Rücklaufkanal 13 bzw. 14 hat einen dem Durchmesser der Kugeln 3 entsprechenden inneren Durchmesser und eine radiale Öffnung 15, die sich in Führungsschienenlängsrichtung erstreckt und mit gegenüber dem Kugeldurchmesser geringerer Breite ausgeführt ist. Die Rücklaufkanäle 13 und 14 weisen an ihren von der Öffnung 15 abgewandten Längsseiten eine an der Führung der Kugeln 3 mitwirkende gemeinsame Bodenwand 16 auf, so dass die Kugeln 3 auch dann in dem jeweiligen Rücklaufkanal 13 bzw. 14 des Führungsteils 4 gehalten werden, wenn dieses von dem Führungswagen 1 abgenommen wird. Das Führungsteil 4 kann als elastisches Bauteil aus einem Kunststoff oder Metall bestehen. Der U-Schenkel 6 weist zwischen den beiden Laufbahnen 10 und 11 für die tragenden Kugeln 3 eine vorstehende Nase 17 auf, die zu der eindeutigen Fixierung und Halterung des Führungsteils 4 in dem Lager beiträgt. Figur 2 zeigt, wie der Führungswagen 1 mit einer Schleifscheibe 18 bearbeitet wird. Die Drehachse 19 der Schleifscheibe 18 verläuft außerhalb des Führungswagens 1 und ist zu der Symmetrieebene 20 des Führungswagens 1 in einem spitzen Winkel α angeordnet. Auf diese Weise ist es möglich, mit einem Teil der Schleifscheibe 18 sowohl die dem U-Steg 5 benachbarte Laufbahn 10 und die von dem U-Steg 5 entfernte Laufbahn 11 an der Innenseite des einen U-Schenkels 6 als auch gleichzeitig mit einem weiteren Teil der Schleifscheibe 18 die Anschlagfläche 12 an der Außenseite des anderen U-Schenkels 6 zu schleifen. Damit ein Teil der Schleifscheibe 18 in den Wagenhohlraum 7 hineinragen und dort die Laufbahnen 10 und 11 schleifen kann, enden die beiden von dem U-Steg 5 entfernten Laufbahnen 11 des Führungswagens 1 an einer gedachten Verbindungsebene 21, welche durch die Mittelpunkte der an den Laufbahnen 11 abrollenden tragenden Kugeln 3 verläuft und die beiden U-Schenkel 6 an den Unterseiten begrenzen.

### Bezugszahlenliste

- 1: Führungswagen
- 2: Führungsschiene
- 3: Kugel
- 4: Führungsteil
- 5: U-Steg
- 6: U-Schenkel
- 7: Wagenhohlraum
- 8: obere Laufbahn
- 9: untere Laufbahn
- 10: Laufbahn, dem U-Steg benachbart
- 11: Laufbahn, von dem U-Steg entfernt
- 12: Anschlagfläche
- 13: oberer Rücklaufkanal
- 14: unterer Rücklaufkanal
- 15: Öffnung
- 16: Bodenwand
- 17: Nase
- 18: Schleifscheibe
- 19: Drehachse
- 20: Symmetrieebene
- 21: Verbindungsebene
- α: spitzer Winkel

## Patentansprüche

1. Verfahren zur Herstellung eines Linearwälzlager mit einem im Querschnitt U-förmigen Führungswagen (1), der mit einem U-Steg (5) und zwei U-Schenkeln (6) einen Wagenhohlraum (7) bildet und eine Führungsschiene (2) teilweise umgibt sowie über Kugeln (3) an zwei Längsseiten der Führungsschiene (2) abgestützt und längs dieser verfahrbar ist, wobei jeder U-Schenkel (6) des Führungswagens (1) an seiner der Führungsschiene (2) zugewandten Innenseite eine geschliffene Laufbahn (10) mit einem etwa viertelkreisförmigen Querschnitt für die Kugeln (3) aufweist und die Laufbahn (10) mit einer Schleifscheibe (18) hergestellt wird, deren Durchmesser das Diagonalmaß des Wagenhohlraums (7) übersteigt und deren außerhalb des Führungswagens (1) verlaufende Drehachse (19) gegenüber einer Symmetrieebene (20) des Führungswagens (1) in einem spitzen Winkel (α) angeordnet ist, **dadurch gekennzeichnet, dass** an dem Führungswagen (1) an der von der Führungsschiene (2) abgewandten Außenseite jedes U-Schenkels (6) eine Anschlagfläche (12) mit einer Haltekontur für ein die Kugeln (3) enthaltendes Führungsteil (4) ausgebildet wird und die Laufbahn (10) eines der beiden U-Schenkel (6) sowie die Anschlagfläche (12) mit der Haltekontur des anderen U-Schenkels (6) gemeinsam in einem Arbeitsgang mit der Schleifscheibe (18) hergestellt werden.

2. Verfahren nach Anspruch 1, **dadurch gekennzeichnet, dass** der spitze Winkel (α), den die Drehachse (19) der Schleifscheibe (18) und die Symmetrieebene (20) des Führungswagens (1) bilden, etwa 15° beträgt.

3. Linearwälzlager, hergestellt nach dem Verfahren gemäß Anspruch 1.

4. Lager nach Anspruch 3, **dadurch gekennzeichnet, dass** an dem Führungswagen (1) die geschliffene Laufbahn (10) jedes U-Schenkels (6) dem U-Steg (5) benachbart ist und jedem U-Schenkel (6) an dessen Innenseite eine weitere, jedoch von dem U-Steg (5) entfernte Laufbahn (11) mit etwa viertelkreisförmigem Querschnitt für die Kugeln (3) zugeordnet ist, wobei die beiden von dem U-Steg (5) entfernten Laufbahnen (11) an einer gedachten Verbindungsebene (21) der Mittelpunkte einander entsprechender tragender Kugeln (3) beider Längsseiten der Führungsschiene (2) enden.

5. Lager nach Anspruch 3, **dadurch gekennzeichnet, dass** die Führungsteile (4), welche die Kugeln (3) enthalten, an dem Führungswagen (1) lösbar befestigt sind und sich in Längsrichtung von Laufbahnen (8, 9) der Führungsschiene (2) erstrecken, wobei die Kugeln (3) endlose Kugelumläufe bilden und die Führungsteile (4) für jeden Kugelumlauf einen Bereich für tragende Kugeln (3), einen Rücklaufkanal (13, 14) für rücklaufende Kugeln (3) und zwei den Bereich der tragenden Kugeln (3) und den Rücklaufkanal (13, 14) jeweils an deren Enden miteinander verbindende Umlenkkanäle enthalten.

6. Lager nach Anspruch 5, **dadurch gekennzeichnet, dass** jeder in einem Führungsteil (4) eingearbeitete Rücklaufkanal (13, 14) eine auf seiner gesamten Länge sich erstreckende Öffnung (15) aufweist, die sich auch über die Länge des jeweiligen Umlenkkanals erstreckt.

7. Lager nach Anspruch 6, **dadurch gekennzeichnet, dass** das Breitenmaß der Öffnung (15) des Rücklaufkanals (13, 14) kleiner als der Durchmesser der in den Rücklaufkanal (13, 14) eingesetzten Kugeln (3) ist.

8. Lager nach Anspruch 4, **dadurch gekennzeichnet, dass** die dem U-Steg (5) benachbarte Laufbahn (10) eines der beiden U-Schenkel (6) und die von dem U-Steg (5) entfernte Laufbahn (11) dieses U-Schenkels (6) sowie die Anschlagfläche (12) mit der Haltekontur des anderen U-Schenkels (6) gemeinsam in einem Arbeitsgang mit der Schleifscheibe (18) hergestellt sind.

## Claims

1. Method for producing a linear rolling bearing having a guide carriage (1) of U-shaped cross section which with a U-web (5) and two U-legs (6) forms a carriage cavity (7) and partially surrounds a guide rail (2) and also is supported via balls (3) on two longitudinal sides of the guide rail (2) and is movable along the latter, each U-leg (6) of the guide carriage (1) having, on its inside facing the guide rail (2), a ground raceway (10) with a cross section approximately in the form of a quarter circle for the balls (3), and the raceway (10) being produced by means of a grinding wheel (18), the diameter of which exceeds the diagonal dimension of the carriage cavity (7) and of which the axis of rotation (19) running outside the guide carriage (1) is arranged at an acute angle (α) with respect to a plane of symmetry (20) of the guide carriage (1), **characterized in that** the guide carriage (1) has formed on it, on that outside of each U-leg (6) which faces away from the guide rail (2), a stop face (12) with a holding contour for a guide part (4) containing the balls (3), and the raceway (10) of one of the two U-legs (6) and also the stop face (12) with the holding contour of the other U-leg (6) are produced jointly in one operation by means of the grinding wheel (18).

2. Method according to Claim 1, **characterized in that** the acute angle (α) which the axis of rotation (19) of the grinding wheel (18) and the plane of symmetry (20) of the guide carriage (1) form amounts to about 15°.

3. Linear rolling bearing produced by the method according to Claim 1.

4. Bearing according to Claim 3, **characterized in that**, on the guide carriage (1), the ground raceway (10) of each U-leg (6) is adjacent to the U-web (5) and each U-leg (6) is assigned on its inside a further raceway (11) distant from the U-web (5) and having a cross section approximately in the form of a quarter circle for the balls (3), the two raceways (11) distant from the U-web (5) terminating at an imaginary connecting plane (21) of the centre points of mutually corresponding load-bearing balls (3) of the two longitudinal sides of the guide rail (2).

5. Bearing according to Claim 3, **characterized in that** the guide parts (4) which contain the balls (3) are fastened releasably to the guide carriage (1) and extend in the longitudinal direction of raceways (8, 9) of the guide rail (2), the balls (3) forming endless ball orbits, and, for each ball orbit, the guide parts (4) containing a region for load-bearing balls (3), a run-back channel (13, 14) for running-back balls (3) and two deflecting channels connecting the region of the load-bearing balls (3) and the run-back channel (13, 14) to one another in each case at their ends.

6. Bearing according to Claim 5, **characterized in that**, each run-back channel (13, 14) incorporated in a guide part (4) has an orifice (15) which extends over its entire length and also extends over the length of the respective deflecting channel.

7. Bearing according to Claim 6, **characterized in that** the width dimension of the orifice (15) of the run-back channel (13, 14) is smaller than the diameter of the balls (3) inserted into the run-back channel (13, 14).

8. Bearing according to Claim 4, **characterized in that that** raceway (10) of one of the two U-legs (6) which is adjacent to the U-web (5) and that raceway (11) of this U-leg (6) which is distant from the U-web (5) and also the stop face (12) with the holding contour of the other U-leg (6) are produced jointly in one operation by means of the grinding wheel (18).

## Revendications

1. Procédé de fabrication d'un palier linéaire à billes comprenant un chariot de guidage (1) à section en forme de U, qui forme une cavité de chariot (7) par un dos de U (5) et deux branches de U (6) et entoure partiellement un rail de guidage (2), et qui, par l'intermédiaire de billes (3), s'appuie contre deux côtés longitudinaux du rail de guidage (2) et peut être déplacé le long de ce dernier, sachant que chaque branche de U (6) du chariot de guidage (1) présente, sur son côté intérieur tourné vers le rail de guidage (2), une voie de roulement meulée (10) de section environ en quart de cercle pour les billes (3), et la voie de roulement (10) est réalisée avec une meule (18) dont le diamètre est supérieur à la dimension diagonale de la cavité de chariot (7) et dont l'axe de rotation (19), s'étendant en dehors du chariot de guidage (1), est disposé sous un angle aigu (α) par rapport à un plan de symétrie (20) du chariot de guidage (1), **caractérisé en ce qu'**une surface de butée (12), dotée d'un contour de retenue pour un élément de guidage (4) contenant les billes (3), est configurée sur le côté extérieur de chaque branche de U (6) qui est opposé au rail de guidage (2), et la voie de roulement (10) d'une des deux branches de U (6) ainsi que la surface de butée (12), dotée du contour de retenue, de l'autre branche de U (6) sont réalisées conjointement en une opération par la meule (18).

2. Procédé selon la revendication 1, **caractérisé en ce que** l'angle aigu (α) que forment l'axe de rotation (19) de la meule (18) et le plan de symétrie (20) du chariot de guidage (1) est égal à environ 15°.

3. Palier linéaire à billes fabriqué d'après le procédé selon la revendication 1.

4. Palier selon la revendication 3, **caractérisé en ce que**, sur le chariot de guidage (1), la voie de roulement meulée (10) de chaque branche de U (6) est voisine du dos de U (5), et une voie de roulement supplémentaire (11) de section environ en quart de cercle pour les billes (3), mais éloignée du dos de U (5), est associée à chaque branche de U (6) sur le côté intérieur de cette dernière, sachant que les deux voies de roulement (11) éloignées du dos de U (5) se terminent dans un plan de jonction imaginaire (21) des centres de billes portantes (3) mutuellement correspondantes des deux côtés longitudinaux du rail de guidage (2).

5. Palier selon la revendication 3, **caractérisé en ce que** les éléments de guidage (4) qui contiennent les billes (3) sont fixés de manière amovible sur le chariot de guidage (1) et s'étendent dans la direction longitudinale de voies de roulement (8, 9) du rail de guidage (2), sachant que les billes (3) forment des circulations de billes sans fin et que les éléments de guidage (4) contiennent, pour chaque circulation de billes, une région pour billes (3) portantes, un canal de retour (13, 14) pour les billes (3) en retour, et deux canaux de renvoi qui relient entre eux à leurs extrémités respectives la région des billes (3) portantes et le canal de retour (13, 14).

6. Palier selon la revendication 5, **caractérisé en ce que** chaque canal de retour (13, 14) pratiqué dans un élément de guidage (4) présente une ouverture (15) s'étendant sur toute sa longueur, qui s'étend également sur la longueur du canal de renvoi respectif.

7. Palier selon la revendication 6, **caractérisé en ce que** la dimension de largeur de l'ouverture (15) du canal de retour (13, 14) est inférieure au diamètre des billes (3) installées dans le canal de retour (13, 14).

8. Palier selon la revendication 4, **caractérisé en ce que** la voie de roulement (10) d'une des branches de U (6) qui est voisine du dos de U (5) et la voie de roulement (11) de cette branche de U (6) qui est éloignée du dos de U (5), ainsi que la surface de butée (12), dotée du contour de retenue, de l'autre branche de U (6) sont réalisées conjointement en une opération par la meule (18).
